# EUROPEAN PATENT APPLICATION

(11) **EP 1 355 397 A1**
(43) Date of publication of application: **22.10.2003**
(21) Application number: 02252296.5
(22) Date of filing: 28.03.2002
(51) Int. Cl.: H02G 3/06, H02G 3/04, G02B 6/44

(54) **Corner structure for service provision ducting and corner assembly**

(71) Applicant: C & C MARSHALL LIMITED, ST. Leonards-on-Sea, East Sussex TN38 9YJ (GB)
(72) Inventor: Austin, Brian, Westfield TN35 4QZ East Sussex (GB); Softley, Andrew John Kenneth, St Leonards TN37 7EF East Sussex (GB); Wilson, Ron, Maidstone ME16 8NR Kent (GB)
(74) Representative: Lamb, Martin John Carstairs

(57) **Abstract**

In order to provide a comer structure for service provision ducting or trunking which can continue segregation of the trunking around the bend which does not require a separate corner piece which has to be fixed separately to the wall, there is provided a comer structure in the form of a cover for two sections of service provision ducting which meet at an angle. The comer structure comprises first and second end walls 17, 19 spaced apart from one another, a joining wall 20 extending between the first and second end walls 17, 19, respective edges 21, 22, 23 or 24,25,26 of the end walls and the joining wall defining a first open and a second opening for receiving the two sections of service provision ducting. The joining wall comprises at least one curved section, the radius of curvature of the curved section being greater than or equal to a value in the range 75mm - 75mm, preferably 50mm. At least one segregating surface 27 extends from the curved wall between the two end walls for dividing at least part of the space between the end walls 17, 19 into at least two regions.

## Description

The present invention relates to a comer structure for joining together two sections of service provision ducting at an angle to one another, and to a comer assembly comprising two sections of service provision ducting at an angle to one another joined by a comer structure.

Ducting for providing for example electrical and communications services is widely used within buildings. Such ducting typically comprises a longitudinally extending channel of indefinite length defined by a longitudinally extending base member and a pair of longitudinally extending wall members projecting from the base member. Various longitudinally extending mounting means are typically provided for supporting within the ducting longitudinally extending electrical conductors (commonly called busbars), or electrical cables or data communications cables and fibre optic cables.

The ducting may be further subdivided into a pair of parallel co-extending channels of indefinite length divided by a longitudinally extending internal wall member projecting from the base member. This arrangement is commonly employed to provide channels for different types of service or services which need to be kept away from one another, to prevent electrical short circuits or interference between signals carried by different cables. This division of ducting into parallel channels is referred to as "segregation".

The ducting may comprise trunking which is typically mounted on walls or floors extending in a horizontal direction. It may be mounted extending in any suitable direction, including vertically. The line of the ducting may include at least one comer. The comer may lie within a plane (a so called "flat bend") or it may extend across the intersection between two walls which meet at an internal bend or at an external bend. Where the line of ducting includes such a bend, normal practice has been to lay service provision ducting up to or close to the position of the comer and to either cut the ducting in a mitre so that it forms the comer itself or to provide corner structures which cover the ducting at the comer.

Particular problems can be encountered when the ducting is intended to carry communications cables, particularly fibre optic cables.

Due to the internal design of such cables, it is important not to bend them in such that way that they have a radius of curvature less than a given amount, which is normally from 25mm to 75mm, with 50mm being typical. The actual value will be determined by the respective properties of the cable and is normally specified by the manufacturer. An ordinary mitre bend or normal bend structure in ducting will contain curves of radius of curvature much less than such an amount, which will therefore be unsuitable for fibre optic cables.

This problem has been dealt with in the past by providing special comer pieces which have a defined radius of curvature extending over the region of the comer, which engage with the existing ducting. Examples of this arrangement are shown for example in GB2338679 and WO98/47211.

Each of these describes special comer pieces for providing a radius of not less than 50mm. However, each requires a special base part which entirely replaces the service provision ducting at the respective comer. This introduces a number of problems. The separate comer piece has to be separately fixed to prevent it from being knocked out of position. Furthermore, the fitter would normally need to install the comer piece first and afterwards accurately install the ducting, taking care not to leave any gaps between the comer piece and ducting. This is laborious and prone to error. Existing ducting systems can only be upgraded to improve the design of comer by replacing whole sections of ducting, which can be a complex procedure. The base part required is complex in shape and bulky.

The disclosure of WO98/47211 only relates to an external bend and does not contain any description of segregation. GB2338679 provides a means for continuing segregation around the bend, but it is only achieved by using a special, separate corner base piece which has to be fixed in position on the wall separately from the ducting to which it is connected.

The present inventors have sought a design of corner structure which can continue segregation around the bend but which does not require a separate corner piece which has to be fixed separately to the wall.

The present inventors have realised that a corner structure can be provided which comprises a cover for extending over a pair of ducting sections which meet at an angle, the cover having a curved face whose radius is not less than a value in the range 25 to 75mm, the cover having extending inwardly therefrom a wall member. This has a number of advantages.

Because the corner structure is configured as a cover with a curved face, it can simply be placed in position over existing ducting sections which meet at an angle or over ducting sections meeting at an angle which are installed for the purpose. The inwardly projecting wall of the corner structure maintains segregation around the curved section of large radius. The wall projecting from the corner structure may supplement, overlap or completely replace internal dividing walls of the ducting itself. The corner structure can be fixed in place by engagement with the ducting sections. In this way, a simple structure can be provided which uses the strength of the ducting which is already in place but which can still maintain segregation around a curved part of wide radius of curvature. The corner structure can be designed for use with a flat bend, internal bend or external bend.

In a first aspect, the corner structure is for use with an internal or external bend. According to the first aspect, the present invention provides a corner structure for joining together, at an angle to one another, two sections of service provision ducting, the corner structure comprising:
first and second end walls spaced apart from one another,
a joining wall extending between the first and second end walls, respective edges of the end walls and the joining wall defining together a first opening and a second opening for receiving two sections of service provision ducting,
the joining wall comprising at least one curved section, the radius of curvature of the curved section of the joining wall not less than a value in the range from 25mm to 75mm,
at least one segregating surface extending from the curved wall between the end walls for dividing at least part of the space between the end walls into at least two regions.

The first aspect of the present invention further relates to a corner assembly comprising a corner structure according to the invention engaged with two lengths of service provision ducting of the type comprising a longitudinally extending floor member with at least one wall member extending from the longitudinally extending floor member, the lengths of service provision ducting meeting at an angle to one another so that the floor members of the lengths of service provision ducting, or notional continuations thereof, meet at an angle. In this arrangement, the service provision ducting sections preferably lie together such that a single plane will intersect the open faces of both channels. If a curved track for a conductor or signal cable is envisaged, passing through the corner, the curved track will lie in this single plane. If the curved track has a radius of curvature not less than a value in the range from 25mm to 75mm, the centre portion of the track may rise above the walls of the service provision ducting sections. The corner structure of the present invention provides an additional segregating wall or support for a cable which follows such a curved track,

The corner structure of the present invention may further be designed for use with a flat bend. Accordingly, in a second aspect, the present invention provides a corner structure for joining together at an angle to one another two sections of service provision ducting, the corner structure comprising:
a first, outer wall and a second, inner wall displaced from the first, outer wall,
a joining surface joining the first and second wall together, respective edges of the first and second end walls and the joining surface defining together a first opening and a second opening for receiving respective sections of service provision ducting,
the second, inner wall comprising at least one curved section, the radius of curvature of the curved section of the inner wall being not less than a value in the range from 25mm to 75mm,
at least one segregating surface extending from the joining surface between the first and the second walls for dividing at least part of the space between the walls into at least two regions.

The first, outer wall may comprise a single straight or curved wall, or at least two outer wall segments that meet at an angle.

According to the second aspect of the invention, there is also provided a corner assembly, comprising two sections of service provision ducting, each section of service provision ducting comprising a floor member and at least one wall member extending from the floor member, the floor members of the sections of service provision ducting being substantially coplanar with one another, the assembly further comprising a corner structure according to the second aspect of the invention.

The corner structure of both aspects of the invention is in the form of a cover.

The radius of curvature of curved sections is not less than a predetermined value. This value will lie in the range 25 - 75mm, depending on the type of cable to be used. Preferably, the radius of curvature in either aspect of the invention of the curved section is 50mm or more.

The corner piece according to both aspects of the present invention can be used with ducting of any suitable type. The ducting may be made of cast, moulded, formed or extruded material, for example thermoplastic or metal, particularly uPVC or aluminium. Suitably the ducting comprises other members projecting from the base member for engaging with cables, conductors, busbars, optical fibres etc. The ducting may comprise cover means for closing the channels. Suitable ducting is described for example in GB-A-2253096 and GB-A-2282278.

The two sections of service provision ducting may meet at a flat bend an internal bend or external bend. They may meet at any angle, though it is preferred that they meet substantially at a right angle. The sections of service provision ducting may extend right up to the corner, abutting one another at the corner, or they may terminate slightly short of the corner. The ends of the sections of service provision ducting may be cut at an angle, to provide a mitre joint.

The corner structure of both aspects of the invention may be formed of any suitable material, for example metal or thermoplastic, such as aluminium or uPVC. It may be formed by any suitable method, for example casting, moulding or forming.

The corner structure may be single, integral piece. Alternatively, it may comprise a plurality of separate pieces releasably fixed together. For example, there may be a first corner structure part comprising at least one end wall and a part of a joining wall, a second corner structure part comprising the other end wall, and a corresponding part of the joining wall, a segregating surface being formed on at least one of the corner structure parts, the corner structure parts being releasably joinable together to define the corner structure, Alternatively, the corner structure may comprise a plurality of parts which join along the plane intersecting the corner which the corner structure defines. The corner structure may be formed from more than two corner structure parts, there being two end corner structure parts and at least one middle corner structure part. In a preferred embodiment, the end corner structure parts are configured so that they may be connected to one another or, selectively, connected to respective ends of a middle corner structure part. In this way, a corner structure of required size can be constructed from a small set of different parts.

In a preferred embodiment, the corner structure of either aspect of the present invention is available as a kit of parts.

In the first aspect of the invention, the end walls of the corner structure may be curved or substantially planar. They may be similar in size and shape to one another or different. They maybe defined by a first, substantially straight line segment extending from a corner position, a second line segment which defines a part of the first opening, a curved line segment which defines an end of the joining wall, the radius of curvature of the curved line segment being substantially the same as that of the curved section of the joining wall , a fourth line segment defining part of the second opening and a fifth, substantially straight line segment which meets the first line segment at the corner. The first and fifth line segment suitably meet at an angle which is in the range of 60° - 120°, most preferably about 90°. In use, the first and fifth line segments are configured to lie against the walls defining the corner around which or into which the corner structure is fitted.

If the corner structure is for use with an internal bend, the included angle in the respective end wall is suitably around 90°. In this case, the curved line segment will define a re-entrant part of the figure defined in the end wall.

In contrast, if the corner structure is for use in an external bend, the first and fifth line segments form a re-entrant structure in the figure defined by the end wall, included angle being in the region of 270°. In this case, the curved line segment defines an externally bowed line.

In either aspect of the invention, the curved surface may comprise a single curve or it may comprise a series of curves in succession. In this case, no curve will have a radius curvature of less than 25mm or greater than 75mm.

In both aspects of the invention, the first and second openings are preferably configured to fit snugly over service provision ducting so that there is substantially no gap when the corner structure is in position on the service provision ducting.

The corner structure of both aspects of the present invention is particularly suitable for use with service provision ducting of the type having at least one internal dividing wall. The corner structure is preferably configured so that, in use, the segregating surface extending from the curved wall will overlap the dividing surface of the service provision ducting. In the alternative, it may be configured to extend up to and to terminate against the end of the dividing wall of the service provision ducting. In either way, the segregating wall effectively continues the segregation provided by the dividing wall of the service provision ducting into space which would otherwise not be reached by the dividing wall.

The segregating surface may be configured so that it is substantially coextensive with the first and second end walls so that, when the corner structure is in position, the corner structure and the wall with which it is engaged define together at least two segregated channels.

In use, in order to ensure that the channel defined by the corner structure does not have a radius of curvature of less than a value in the range of 25-75mm on both inside and outside of the curve, the corner assembly of either aspect of the present invention may further comprise a base member comprising at least one curved surface having a radius of curvature not less than a value in the range of 25-75mm. The base member may be a free standing member engagable with the ends of the service provision ducting sections. Alternatively, it may comprise at least one curved surface of width less than the width of a channel of the service provision ducting, whereby the base part may be located overlapping at least part of the end of the service provision ducting at the corner. Where a base part is used, means may be provided on the base part and the corner structure for engaging one another. However, it has been found that it is possible to provide a rigid structure in which there is no engagement between the base part and the corner structure.

The corner structure of either aspect of the invention may be treated on a part or all of the internal surfaces with an electro magnetic screening material, for example vapour deposited copper. This is provided to prevent magnetic fields due to electric current carrying members interfering with signals carried by other cables in adjacent channels or in adjacent ducting. Lengths of service provision ducting connected to the corner structure may be similarly treated.

The present invention will be further described by way of example only with reference to the accompanying drawings, in which:
Figures 1 to 4 show sketch isometric drawings of known ways of forming corners in service provision ducting.
Figure 5 is an isometric sketch of a first embodiment of corner structure for an internal bend according to the first aspect of the invention.
Figure 6 is an isometric sketch of a first embodiment of corner structure for an external bend, according to the first aspect of the invention.
Figure 7 is an isometric sketch of a corner structure for an internal bend, according to a second embodiment of the first aspect of the invention.
Figure 8 is an isometric sketch of a corner structure for an external bend according to a second embodiment of the first aspect of the invention.
Figure 9 is an isometric sketch of a corner structure for an internal bend according to a third embodiment of the first aspect of the invention.
Figure 10 is an isometric sketch of a corner structure for an external bend according to a third embodiment of the first aspect of the invention.
Figure 11 is an isometric sketch of a corner structure for an internal bend according to a fourth embodiment of the first aspect of the invention.
Figure 12 is an isometric sketch of a corner structure for an external bend, according to a fourth embodiment of the the first aspect of invention.
Figure 13 is an isometric sketch of a corner structure according to a fifth embodiment of the first aspect of the invention for an internal bend.
Figure 14 is an isometric sketch of a base member for use with a corner structure for an external bend according to the first aspect of the invention.
Figure 15 is an isometric sketch of a base member for use with a corner structure for an internal bend according to the first aspect of present the invention
Figure 16 is a schematic plan view of a corner structure for an internal bend according to the first aspect of the invention, engaged with two sections of service provision ducting.
Figure 17 is a schematic plan view of a corner structure for an external bend according to the first aspect of the invention engaged with two sections of service provision ducting.
Figures 18-21 are views of a sixth embodiment of corner structure for an internal bend according to the first aspect of the invention.
Figures 22-26 are views of a fifth embodiment of corner structure for an external bend, according to the first aspect of the invention.
Figure 27 is sketch isometric view of a first embodiment of corner structure for a flat bend, according to the second aspect of the invention.
Figure 28 is sketch isometric plan view of the corner structure of figure 27, engaged with two sections of service provision ducting.

The present invention will be described below as it applies to communication cables which must not have a bend radius of less than 50mm (for example certain designs of fibre optic cables, telephone cables or category 5e, 6 or 7 cables). However, the present invention can be applied to other cables, for example fibre optic cables whose bend radius must not be less than any predetermined value which falls in the range 25-75mm. It will be apparent to the person skilled in the art that it is simply necessary to change the radius of curvature of the respective curved parts which are described below as having a radius of curvature of 50mm or not less than 50mm, to the predetermined value or not less than it.

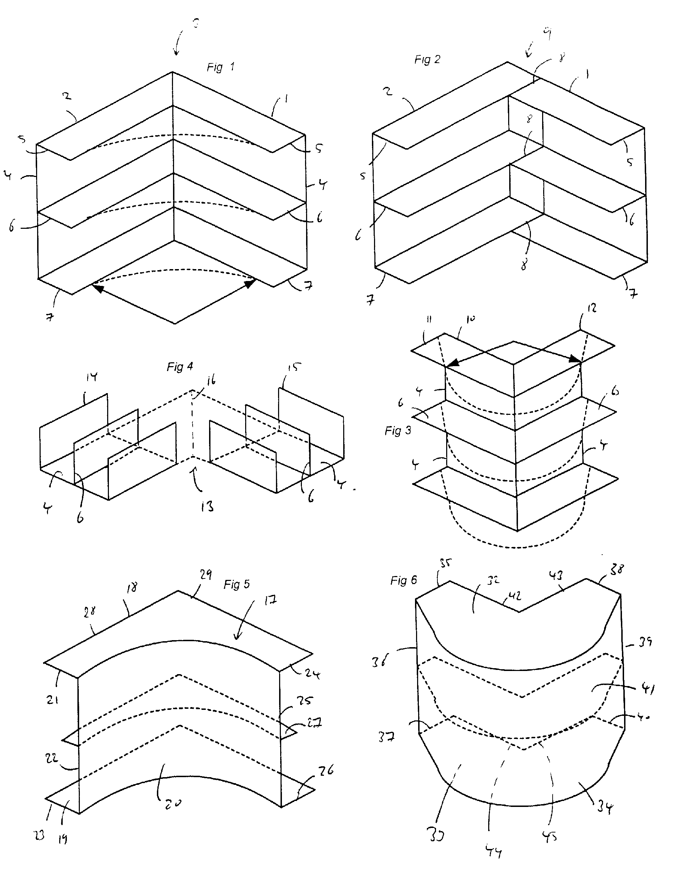

Figures 1 to 4 are sketch isometric views showing known ways of forming corner structures in service provision ducting. The views happen to show ducting with dual channels, but similar principles apply with single channel ducting or other types of multi-channel ducting.

In figure 1, two sections of service provision ducting 1,2 are shown meeting at an angle to define an internal bend 3. The respective ends of sections of service provision ducting have been cut into a mitre structure as can be seen in figure 1. Each section of service provision ducting comprises a floor member 4 and three wall members 5, 6, 7 extending from the floor member 4 which divide the service provision ducting into two longitudinally extending channels.

In use, cables such as electrical conductors or signal cables, such as fibre optic cables may be laid in one or both of the channels of the service provision ducting. When laying the cables, installers will sometimes pull the cable tight, even though this is not necessarily a recommended installation procedure.

In use, the sections of service provision ducting will be covered by lid members which are not shown. If the cables are pulled tight, they will tend to form a 90° bend at the corner, where the two lid members meet. This will result in a bend in the cable of radius of curvature much less than 25mm. Furthermore, the sheathing of the cable could be stripped away by the relatively sharp edge defined by the corner of the ducting. Other damage may also be inflicted as a consequence of the cable being pulled over the corner: for example the twist configuration or twist ratios of the cables could be damaged if they are of a twisted pair type.

Introducing bends of radius less than 25mm in many forms of signal cables, for example data cables, will lead to signal degradation. For illustrative purposes a bend of radius 50mm is shown in figure 1.

Figure 2 is a sketch isometric view of another known way of forming an internal bend. In this case, instead of forming the service provision ducting sections 1,2, with mitres at the end, they are simply abutted at the lines 8. Figure 2 is somewhat idealised. In practice, one or both of the ducting sections 1, 2 will sometimes be of insufficient length, resulting in a gap between the two. This is unsightly.

The corner structure 9 of figure 2 will also suffer from the same problems of introducing undesirable bends into signal cables as the structure of figure 1.

Figure 3 shows a known way of forming an external bend 10 by joining together two sections of service provision ducting 11, 12 which are cut at their ends in a mitre formation. The two sections of service provision ducting 11 and 12, have the same structure as the sections 1 and 2 of figure 1 and will not be described further. Again, if cables are laid in the channels of the service provision ducting 11, 12 they will tend to be pulled tight around the corner, introducing bend of radius much less than 50mm. For comparison, the line of a bend of radius 50mm is shown in dotted lines in figure 3.

Figure 4 is an isometric view of a known way of forming a bend in which the floor members 4 of two lengths of service provision ducting are co-plainar, other wise known as a flat bend. Two sections of service provision ducting 14,15 are shown. They are shown terminating short of position 13 of the corner. If extended, they would reach at the dotted lines 16.

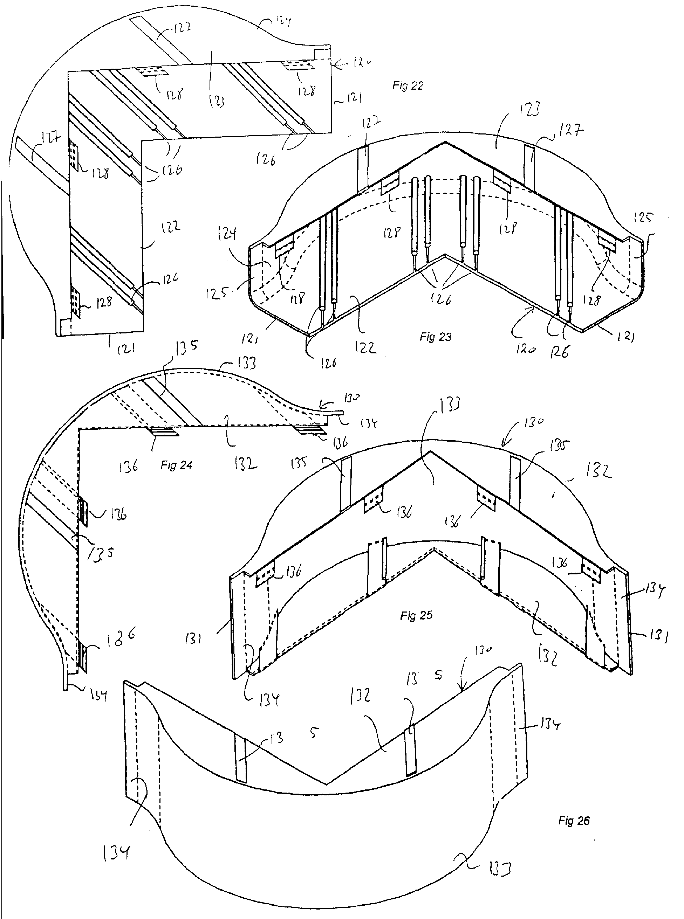

A corner structure for use with the flat bend shown in figure 4 is described further below with reference to the figures 23 and 24.

Figure 5 is a sketch isometric view of a first embodiment of a corner structure for an internal bend according to the first aspect of the invention.

The corner structure, generally designated 17 comprises first and second end walls 18, 19 spaced apart from one another by distance which is slightly greater than the width of the service provision ducting sections 1,2,11,12,14 and 15 of figures 1-4. A joining wall 20 extends between the first and second end walls 18,19, joining them together. In figure 5, at each point where the joining wall meets an end wall 18 or 19, it is at a right angle to the plane of the respective end wall.

The edge 21 of the end wall 18, the edge 22 of the joining wall 20 and the edge 23 of the second end wall 19 together define a first opening for receiving a first section of service provision ducting. Similarly, the edges 24, 25 and 26 of the end wall 17, joining wall 20 and second end wall 19 respectively, define a second opening for engaging a second section of service provision ducting.

Joining wall 20 comprises a curved section. The radius of curvature of the curved section is not less than 50mm throughout.

A segregating surface 27 is formed extending from the inside of the curved wall 20 between the end walls 19 and 18, dividing the space between the end walls into two channels. As will be described further below, the segregating wall 27 is positioned so that, in use, it overlaps the central walls 6 of the trunking sections, so that segregation of the trunking sections into channels is continued around the corner. In use, if a communication cable is laid in a channel of the service provision ducting and pulled tight around the corner, it will lie against the inside of the joining wall 20 in such way that at no point will its radius of curvature be less than 50mm.

The edges 28 and 29 of the first face 18 and the edges 30 and 31 of the second end face 19 are configured to lie against walls defining the corner into which the corner structure is to be mounted in use.

Figure 6 is a sketch isometric view of a corner structure according to the first aspect of the invention for an external bend for joining together at an angle two sections of trunking. It comprises a first end wall 32 and a second end wall 33, spaced apart from one another. They are joined by a joining wall 34 which lies at an angle to the end walls 32 and 33 and joins them together. The edge 35 of the first end wall 32, the edge 36 of the joining wall 34 and the edge 37 of the second end wall 33 define a first opening for a first section of trunking. Similarly, the edge 38 of the first end wall 32, the edge 39 of the joining wall 34 and the edge 40 of the second end wall 33 define a second opening for a second section of trunking. A segregating wall 41 projects inwardly from the inside of the joining wall 34. In use, as will be further described below, the segregating wall 41 is configured to lie against the dividing walls 6 of the trunking sections. In this way, the segregating wall maintains the segregation of the trunking into channels around the external bends. Further, the corner structure of figure 6 creates a path of radius greater than 50mm at the external bend so that a cable can be laid, lying on the segregating wall 41 or bottom wall 34 so that it has a radius of curvature which is not less than 50mm.

In use, the corner structure of figure 6 is configured to lie with edges 42 and 43 of the end wall 32 and edges 44 and 45 of the end wall 33 lying against the walls which define the corner. The corner structure of figures 5 and 6 are configured so that the respective segregating wall 27 and 41 in use will overlap with the dividing wall 6 of the trunking sections. It is possible to configure the segregating such that, in use, they abut the outer edges of the dividing walls 6 and do not overlap them.

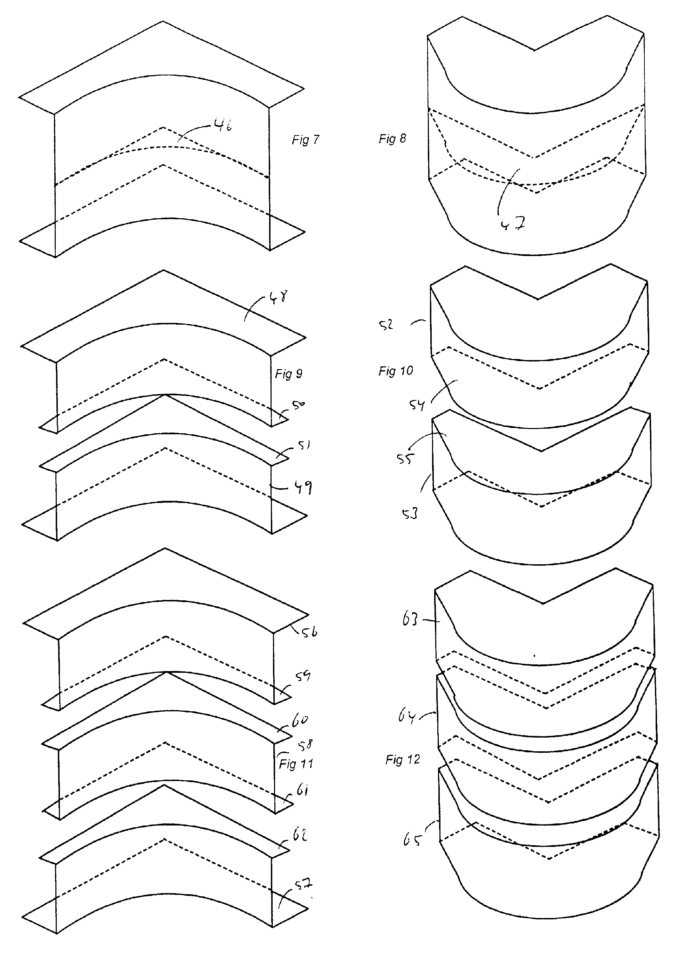

Figures 7 and 8 show further embodiments of corner structures according to the first aspect of the invention in which the respective segregating surfaces 46 and 48 are short compared to those shown in figures 5 and 6, being configured to abut the outward edges of the walls 6 of the trunking sections.

Figures 9-13 show further embodiments of corner structures according to the first aspect of the present invention. They share many features with figures 5 and 6 and will not be described in detail, except for points in which they differ from figures 5 and 6.

While figures 5 and 6 show the corner structures as integral formations, it is possible to form the corner structures from a number parts which are assembled together. For example, as shown in figures 9, the comer structure for an internal bend may be assembled from a top part 48 and a bottom part 49. Each comprises a respective segregating surface 50, 51 which in use lie adjacent one another. Alternatively, one of the sections 48, 49 may be constructed without any segregating surface. Connecting means (not shown) may be provided for releasably connecting the sections 48 and 49 together. A similar arrangement is shown in figure 10 for a corner structure for an external bend comprising two sections 52,53 with corresponding segregating surfaces 54 and 55.

Figures 11 and 12 show that the corner structures may be formed of three sections. In figure 11, the corner structure for an internal bend comprises top sections 56 and 57 and a middle section 58. Segregating surfaces 59, 60, 61 and 62 are provided as shown in figure 11. Figure 12 shows a similar arrangement for an external bend comprising top and bottom sections 63, 65 and a middle section 64.

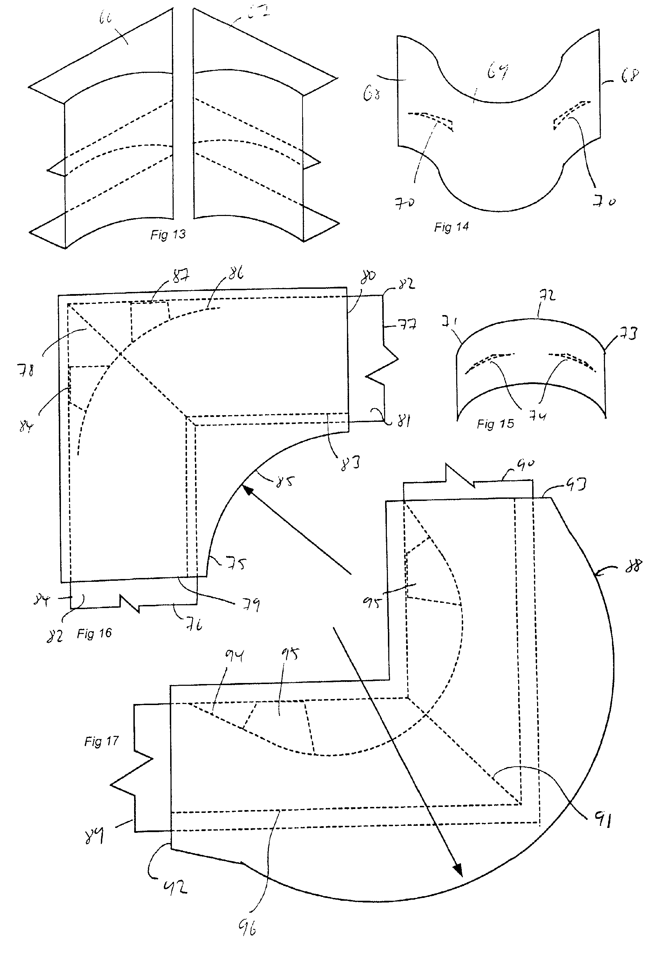

Figure 13 shows how a corner structure for internal bend may be formed from two sections 66, 67 which meet at a plane which bisects the corner into which the corner structure is to be fitted.

Figures 14 and 15 are sketch isometric views of base parts which may be used with a corner structure of the present invention. The base part shown in figure 14 is for use in an external bend. It comprises a pair of end surfaces 68 which in use are configured to lie against the floor members 4 of trunking sections which meet in an external bend. The end surfaces 68 are slightly curved, having a radius of curvature of 50mm or more. They are joined to one another by a curved section 69, which again has radius of curvature of 50mm or more. On a rear surface of the base member, for lying against the floor members 4 of the trunking sections, there are provided locating ribs 70, shown in dotted lines.

Figure 15 is an isometric view of a base part for use with a corner structure for an internal bend. It comprises end portions 71 and 73 which, in use, lie flat against the respective floor members 4 of two adjoining trunking sections and a curved section 72, joining the end sections 71 and 73, the radius of curvature of the joining section 72 being not less than 50mm. Locating ribs 74 are provided extending from the rear face of the base member of figure 15, to allow it to be located in position in the channels of the trunking sections.

Figure 16 is a plan view of a corner assembly according to the first aspect of the invention, comprising a corner structure for an internal bend engaged with a pair of trunking sections. The corner structure, designated 75 lies over the trunking sections 76 and 77. The trunking sections 76 and 77 are mitred at their ends meeting in a mitre formation 78 at the corner. The trunking sections 76 and 77 enter the corner structure via a first opening 79 and a second opening 80 respectively. The surfaces of the trunking sections 76 and 77 which are visible in figure 16 are wall members 81 and 82 which extend upwardly from base members 83 and 84. The open face of the trunking sections 76 faces to the right hand side of page. The open face of the trunking section 77 faces to the bottom of the page. A communications cable laid in the trunking section 76 and 77, which is pulled tightly around the bend will lie against the curved joining wall 85 of the corner structure 80, so that its radius of curvature is not less than 50mm.

Sometimes, when cables are laid into trunking, they are pushed by the installers so that they go into corners. In order to prevent a cable pushed in this way from acquiring a bend of radius of curvature less than 50mm at the corner, a base part 86 is provided which corresponds to that shown in figure 15. The locating flanges 87 corresponds to the flanges 75 shown in figure 15. They can be seen resting in position against the floor members 83 and 84 of the trunking sections 76 and 77.

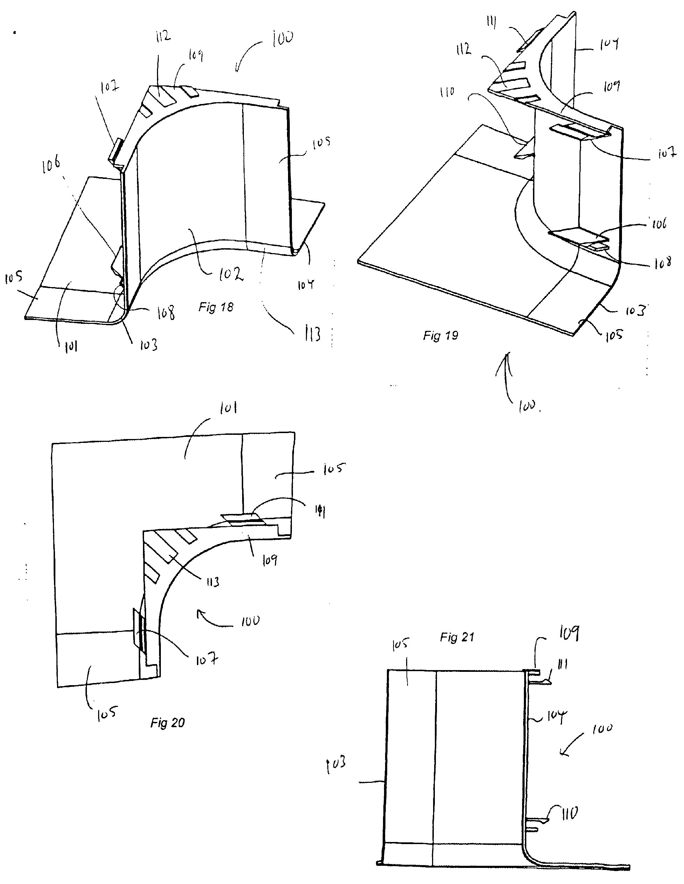

Figure 17 is a schematic plan view of a corner assembly according to the first aspect of the invention comprising a corner structure 88 for an external bend, engaged with two sections of the trunking, 89, 90. The two sections of trunking meet at a mitre joint 91 at the corner.

Also visible in figure 16, in dotted lines is the boundary 83 of the segregating wall which projects inwardly from the curved wall 85 and overlaps a dividing walls (not shown) which divide the trunking sections 76 and 77 into two parallel channels.

The trunking sections 89 and 90 are received within first and second openings 92 and 93 of the corner structure 88 respectively. The channel defined by the trunking section 89 faces downwardly. The channel defined by the trunking section 90 faces to the right of the page. Also visible, mounted in the trunking sections 89 and 90, is a base part 94 which comprises a curved wall of radius greater than 50mm. It also comprises a pair of ribs 95 for locating it against the floor members of the trunking sections 89 and 90. The base member 94 corresponds to the one shown in figure 14. Also visible in dotted lines in figure 17 is the outline 96 of the inwardly directed segregating wall of the curved wall of the corner structure 88 which overlaps dividing walls (not shown) which extend longitudinally in the trunking sections 89 and 90 dividing them into a pair of parallel channels.

Figures 18-21 show views of a corner structure part corresponding generally to that shown in figure 9.

In figure 18, the corner structure, generally designated 100 corresponds to the corner structure part 49 of figure 9. It comprises an end wall 101 and a joining wall 102 extending from the end wall 101. In use, the corner structure part 100 will be used with a corner structure part of exactly corresponding design to form a complete corner structure. The edge 103, combined with the corresponding edge of a second corner structure part, will define a first opening for a trunking section. Similar, the edge 104 will, with a corresponding edge of the second corner structure part, define a second opening for a trunking section. A stepped portion 105 is shown around the part of the corner structure part adjacent to the edge 103 which, in use, will fit snugly around the end of the trunking section. Connecting means 106 and 108 can be seen which, between them, form a gripping structure, for gripping formations on trunking (not shown). A segregating surface 109 is provided. This defines, with structure 107, a further gripping means. Gripping means 110 are visible in figure 19 corresponding to the gripping means 106, 108, for engaging a second trunking section. It should be noted that the edges defining the sides of the gripping means 106, 107, 108, 110, 111 are at an angle of about 45° to the line of the edge 103. This is because the corner structure part is intended to be inserted into trunking in a direction which is generally parallel to the diagonal bisecting the corner between the trunking sections (the line of the mitre, if the trunking sections are joined in a mitre formation). By forming the edges in a direction which is parallel to the direction of insertion, ease of insertion is obtained. Alignment ribs 112 are formed in a segregating surface 109. Again, these are formed extending parallel to the direction of insertion so that they do not resist insertion if they should encounter a part of the trunking. During assembly, the alignment ribs 112 key with corresponding ribs on the corner structure part with which the corner structure part 49 is combined.

The edge 113 between the joining wall 102 and end wall 101 is rounded to give a pleasing aesthetic effect.

Figures 22 and 23 show two views of a first corner structure part 120 for an external bend. Figure 22 is a plan view of the corner structure part 120 and figure 23 is a perspective view from the rear. Figures 24-26 shows views of a second corner structure part 130 for use with an external bend. Figure 24 shows a plan view. Figure 25 shows a perspective view from the rear and figure 26 shows a perspective view from the front.

Two corner structure parts 120 and a single corner structure part 130 can be combined together to form a complete corner structure as shown in figure 12 above. When assembled in this way, edge segments 121 and 131 of the respective corner structure parts will be combined to form an opening for receiving a respective trunking section.

The corner structure part 120 comprises an end wall 122 and a segregating wall 123 joined by a curved joining wall section 124. A stepped portion 125 is formed at either end of the corner structure part where the corner structure part engages the ends of respective trunking sections, to enable the corner structure to overlap the trunking and retain its lid. Alignment ribs 126 are provided at intervals on the inside of the end wall 122. Alignment ribs 127 are also formed on the segregating wall 123. During assembly the alignment ribs key with corresponding alignment ribs on another corner structure part 130 when the two are combined to form a complete or part of a complete corner structure, as discussed above. It can be seen that these ribs extend at 45° to the edges 121. This is because, in use, the corner structure part will be inserted into the corner in a diagonal direction, generally parallel to the diagonal bisecting the angle of the corner. By arranging ribs parallel to the direction of insertion, they will be prevented from resisting the movement. Finally, connecting means 128 are provided for forming a snap fit connection to the walls of trunking (not shown) and for retaining a lid (also not shown). The connecting means 128 lie in the plane of the segregating surface 123 and their edges are generally parallel to the strengthening ribs 126, to ease insertion.

The corner structure part 130 comprises a pair of segregating walls 132 spaced apart from one another and joined together by a curved wall section 133 whose radius is not less than 50mm. A stepped section 134 is provided at the end of the corner structure part for overlapping with the end of a trunking section and for retaining a lid.

Alignment ribs 135 are formed in the segregating surface 133. They extend in a direction which is generally parallel to the insertion direction, as explained for the corner structure part 120. These ribs are also for keying with corresponding ribs on another corner structure part when assembled.

Connecting means 136 are provided for engaging the top edges of trunking (not shown) to fix the corner structure part in position. The connecting means 136 extend in the plane of the segregating surface 132 and their side edges are parallel to the alignment ribs 135 and the insertion direction, as explained further above.

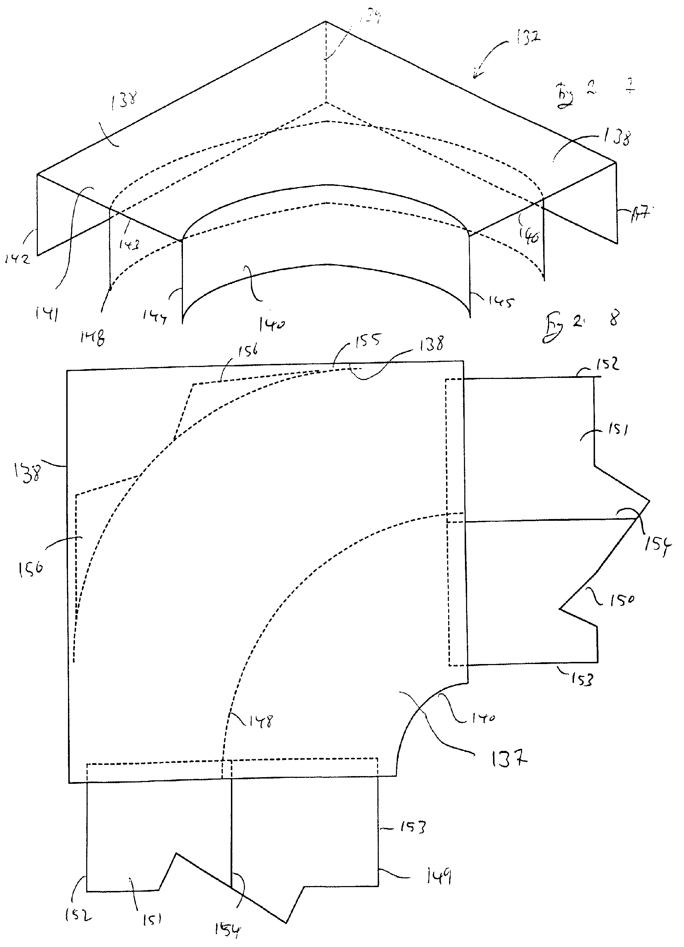

Figure 27 shows a sketch isometric view of a corner structure 137 according to the second aspect of the invention for use with a flat bend.

A corner structure 137 comprises an outer wall comprising two wall segments 138 which meet at the corner 139 and a second, inner wall 140 of radius of curvature in the range 25-75mm. A joining surface 141 extends across the top of the corner structure and joins the outer wall 138 to the inner wall 140. The edges 142, 143, and 144 at one end and the edges 145, 146 and 147 at the other end define openings for receiving respective sections of service provision ducting, as shown in figure 28. A curved segregating surface of radius of curvature larger than the radius of curvature of the inner wall and normally falling in the range of 25-75mm is shown depending from the joining surface 141. The segregating surface 142 divides the space defined within the corner structure into two regions. The corner structure 137 of figure 27 can be used as shown in figure 28. It is shown engaged with two sections of service provision ducting 149 and 150. Each section of service provision ducting comprises a floor member 151, a pair of upstanding wall members 152, 153 and a central dividing wall 154 for segregating the lengths of service provision ducting 149, 150 into a pair of parallel channels. The lengths of service provision ducting 145 and 150 extend indefinitely to the bottom of the page and to the right of the page respectively. They are shown with their floor members 151 coplanar. The corner structure is shown engaging around the ends of the sections of service provision ducting. The segregating wall 148 of the corner structure overlaps the central dividing walls 154 of the lengths of service provision ducting 149, 150 and thus continues the segregation of the service provision ducting around the bend. A radiussed insert 155 substantially according to figure 15 is shown engaged in the corner defined between the wall sections 138 to provide a smooth curved outer wall. In this case, the insert 155 has a radius of curvature which is greater than the radius of curvature of the segregating wall 148. It is provided with a pair of ribs 156 which engage against the walls 138, to hold the insert in place.

The present invention has been described above by way of example only and modifications can be made within the scope of the invention which extends to equivalents of the features described. The invention also consists in any individual features described or implicit herein or shown or implicit in the drawings or any combination of any such features or any generalisation of any such features or combination.

## Claims

1. A corner structure for joining together at an angle to one another, two sections of service provision ducting, the corner structure comprising:
first and second end walls displaced from one another,
a joining wall joining the first and second end walls together,
respective edges of the end walls and joining wall defining together a first opening and a second opening for receiving respective sections of service provision ducting,
the joining wall comprising at least one curved section, the radius of curvature of the curved section of the joining wall being not less than a value in the range from 25mm to 75mm,
at least one segregating surface extending from the joining wall between the end walls for dividing at least part of the space between the ends walls into at least two regions.

2. A corner structure according to claim 1, wherein the radius of curvature of the curved section of the joining wall is not less than 50mm.

3. A corner structure according to claim 1 or 2, comprising a single, integral structure.

4. A corner structure according to claim 1, comprising a plurality of separate pieces releasably fixed together.

5. A corner structure according to any preceding claim, wherein the end walls are each defined by a first, substantially straight line segment extending from a corner position, a second line segment which defines a part of the first opening, a curved line segment which defines an end of the joining wall, the radius of curvature of the curved line segment being substantially the same as that of the curved section of the joining wall, a fourth line segment defining part of the second opening and a fifth substantially straight line segment joining the first line segment at the corner.

6. A corner structure according to claim 5, being for use with an internal bend.

7. A corner structure according to claim 5, being for use in an external bend.

8. A corner assembly, comprising two sections of service provision ducting which meet at an angle, the assembly further comprising a corner structure as claimed in any preceding claim.

9. A corner assembly according to claim 8, wherein the two sections of provision ducting meet at an internal bend or an external bend.

10. A corner assembly according to claim 8 or 9, wherein the sections of service provision ducting comprise at least one internal dividing wall, the segregating surface extending from the curved wall overlapping the dividing wall or extending upto the end of the dividing wall.

11. A corner assembly according to any of claims 8 to 10, further comprising a base member, comprising at least one curved surface having a radius of curvature not less than a value in the range from 25mm to 75mm.

12. A corner assembly according to claim 11, wherein the curved surface has a radius of curvature which is at least 50mm.

13. A corner structure for joining together at an angle to one another two sections of service provision ducting, the corner structure comprising:
a first, outer wall and a second, inner wall displaced from the first, outer wall,
a joining surface joining the first and second walls together, respective edges of the first and second walls and the joining surface defining together a first opening and a second opening for receiving respective sections of service provision ducting,
the second, inner wall comprising at least one curved section, the radius of curvature of the curved section of the inner wall being not less than a value in the range from 25mm to 75mm,
at least one segregating surface extending from the joining surface between the first and the second walls for dividing at least part of the space between the walls into at least two regions.

14. A corner structure according to claim 13 wherein the radius of curvature of the curved section of the inner wall is not less than 50mm.

15. A corner assembly, comprising two sections of service provision ducting, each section of service provision ducting comprising a floor member and at least one wall member extending from the floor member, the floor members of the sections of service provision ducting being substantially coplanar with one another, the assembly further comprising a corner structure as claimed in claim 13 or 14.
